# EUROPEAN PATENT APPLICATION

(11) **EP 4 601 090 A1**
(43) Date of publication of application: **13.08.2025**
(21) Application number: 25156785.5
(22) Date of filing: 10.02.2025
(51) Int. Cl.: H01M 50/213, H01M 50/503, H01M 50/507, H01M 50/509, H01M 50/514, H01M 50/545, H01M 50/55, H01M 50/559, H01M 50/564

(54) **CONTACT ADAPTER, BUSBAR, CONTACTING SYSTEM, METHOD OF CONTACTING A PLURALITY OF BATTERIES AND ASSEMBLY METHOD FOR CREATING A PLUGGED BATTERY PACK**

(30) Priority: 08.02.2024 DE 102024103603; 10.10.2024 DE 102024129327
(71) Applicant: TE Connectivity Solutions GmbH, 8200 Schaffhausen (CH)
(72) Inventor: BAUS, Andreas, 8200 Schaffhausen (CH); OBERST, Marcella Joana, 8200 Schaffhausen (CH); LUDWIG, Michael, 8200 Schaffhausen (CH); SACHS, Soenke, 8200 Schaffhausen (CH); ULRICH, Harald, 8200 Schaffhausen (CH); MASAK, Stefan, 8200 Schaffhausen (CH); BURGHARD, Michael, 8200 Schaffhausen (CH)
(74) Representative: Grünecker Patent- und Rechtsanwälte PartG mbB

(57) **Abstract**

The present invention relates to a contacting system (10), a contact adapter (100) and a busbar (200). The contact adapter comprises a central contact adapter (110) extending in the axial direction (A) and having a bottom surface (112) for attachment to a central terminal (1110) of the battery (1100), an opposite tip (114) for passing through a central contact opening of the busbar (200), wherein the tip (114) rises from the bottom surface (112) to a central contact height (Hz), and a side surface extending between the tip (114) and the bottom surface (112) having a central contacting portion (118) for contacting a central terminal (218) of the central contact opening (222) of the busbar (200) in a radial direction (R). Further, the contact adapter comprises a peripheral contact adapter (120) for arranging around the central contact adapter (110), the peripheral contact adapter (120) having a bottom plate (122) for attaching to an annular terminal (1120) of the battery (1100) and a hollow contact cylinder (124), which rises in the axial direction (A) from the bottom plate (122) to a peripheral contact height (Hp), having a peripheral contacting portion (128) for contacting a peripheral terminal (228) of a peripheral contact opening (220) of the bus bar (200) in the radial direction (R). The central contact height (Hz) is greater than the peripheral contact height (Hp).

## Description

The invention relates to a contact adapter and a corresponding busbar. The invention further relates to a contacting system with such a contact adapter and such a busbar and a method for contacting a plurality of batteries. The invention further relates to an assembly method for creating a plugged battery pack.

A plurality of battery cells are currently connected via seamless connections by welding or gluing with a cell contacting system. This is how the parallel and series connection is realized. For battery packs with more than 1000 individual cells, this method has disadvantages in terms of process time, post-processing, quality and reversibility.

The underlying problem of the invention is to provide a cell contacting system that fulfills at least one of the above requirements in a better, cheaper or simpler way.

The above problems are solved by the subject matter of the independent claims. Preferred embodiments are the subject matter of the dependent claims.

In a general solution, a plugged battery pack with a plurality of batteries is created by an assembly method. The method first involves providing a carrier structure with a cell contact for contacting the plurality of batteries, each battery with two concentric terminals, which are arranged together on one end face of the batteries extending in the axial direction. The method then involves inserting the plurality of batteries into the carrier structure in order to electrically connect at least two cells via the cell contact. The carrier structure with the cell contact is provided before the plurality of batteries are inserted in order to contact the batteries in the battery pack.

For a better understanding of the present invention, it is explained in more detail by means of the embodiments shown in the Figures below. In doing so, the same parts are provided with the same reference signs and the same component designations. In addition, individual features or combinations of features of the various examples shown and described may also, in their own right, represent independent, inventive or invention-conforming solutions.

The present invention will now be described by means of the Figures.

It is shown by:
**Fig. 1** a contact adapter and an end face of a battery before attaching the contact adapter;
**Fig. 2** a contact adapter and an end face of a battery after attaching the contact adapter;
**Fig. 3** a busbar;
**Fig. 4** a busbar with contact rings;
**Fig. 5** a sectional view of a contacting system with part of the busbar according to Fig. 4;
**Fig. 6** a sectional view of a contacting system for a module with several busbars according to Fig. 4;
**Fig. 7** a top view of Fig. 6 contacting system;
**Fig. 8** a plurality of busbars and insulators;
**Fig. 9** a contacting system with battery cells;
**Fig. 10** flowchart for an assembly method,
**Fig. 11** a battery pack with a plurality of battery cells, and
**Fig. 12** a plurality of battery cells.

Batteries are becoming increasingly important, particularly in the field of electromobility. In this context, a wide range of requirements are placed on the batteries.

For example, it may be required that battery cells are used in which both terminals are on a common surface. That is, the positive (+) and negative (-) terminals are next to each other on a surface or side of the battery. As a rule, batteries are bipolar, i.e. the positive and negative terminals are on opposite sides of the battery. A battery in which both poles are arranged on the same surface is therefore sometimes referred to as a "unipolar battery". One advantage of such "unipolar" battery cells is that they can be more compact and easier to handle.

In addition, there are various designs of battery cells, which are used depending on the application and requirements of the battery. For example, there are cylindrical cells, which have the shape of a circular cylinder. Additionally, there are prismatic cells or pouch cells, for example.

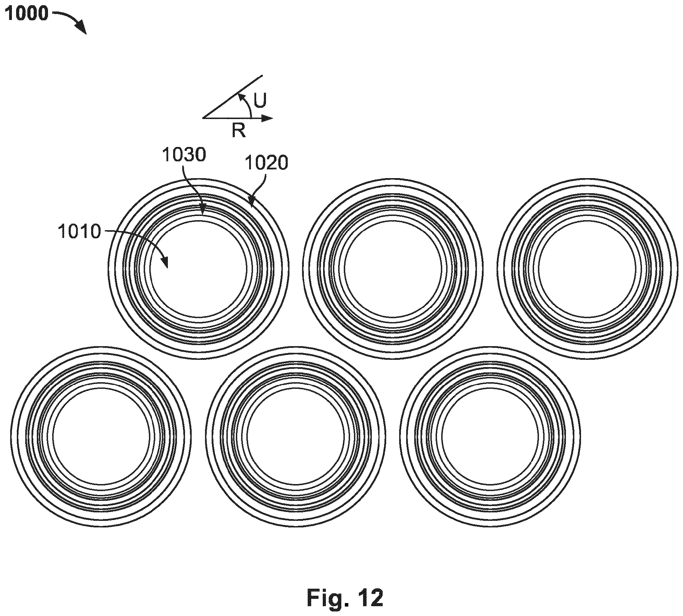

In a "unipolar" cell having a cylindrical shape, the terminals are usually concentrically arranged, as shown in Fig. 12, for example. Fig. 12 shows a cell system 1000 consisting of a plurality of six battery cells. Each battery cell has a central terminal 1110, which is usually circular and is here for example the positive (+) terminal. The central terminal 1110 is usually surrounded by an annular terminal 1120, which here is the negative (-) terminal. In between there is an insulation area 1130. In other words, the two terminals 1110, 1120 and the insulation area 1130 are concentrically arranged.

Concentric refers to the arrangement of shapes or structures that have the same central point, in this case the central point of the central terminal 1110. The annular terminal 1120, which is spaced apart from the concentric terminal in the radial direction R, has the same central point as the central terminal 1110 and is thus arranged concentrically.

In the following, in the description of cylindrical cells, reference is made to a cylindrical coordinate system. In this case, the cell extends in the axial direction A, wherein the distance from the axis is represented by the radial axis R. Finally, the circumferential direction U refers to the azimuth angle.

In addition to the geometry of the battery cell and the arrangement of the terminals, electrical parameters are usually also defined. These include, in particular, the total voltage, capacity or power. This can be achieved by suitable serial and/or parallel connection of the battery cells. This requires the use of a cell contacting system.

As explained above, the above problems are solved by an assembly method. In particular, the problems are solved by a contacting system consisting of a contact adapter, a busbar and an insulator.

The contact adapter allows the contact to be changed from an axial direction to a radial direction. By arranging a peripheral contact adapter around a central contact adapter, i.e. a peripheral contact adapter that extends in the circumferential direction U, a partial form fit can be achieved so that a plurality of batteries can be plugged via the contacting system.

The busbar enables a serial connection through a bending current busbar portion that equalizes a height difference in the axial direction between a peripheral contacting portion height and a peripheral contact height of two adjacent cells.

In other words, the problem is solved by contact adapters arranged at the terminals to establish a plug connection. The arrangement is made at the cell level, e.g. by welding, and assembly in the battery pack is then only done via the plug connection, which simplifies the process. Different adapter heights at the (+) and (-) terminals allow the cells of a segment to be connected at different height levels. This enables a simple modular structure.

The busbar allows a serial plug connection with a good current-conducting material such as copper. The plug connection can be optimized by additional rigid spring elements (e.g. steel spring rings) to generate a high contact force. In this way, in addition to the form fit, a friction fit is also achieved. This ensures the required current carrying capacity, low component costs and reliability with regard to vibration and long-term stability.

Furthermore, the same busbar can be used multiple times. Adaptation of the busbar is only required for the first and last segment. This allows the busbar to be manufactured cost-effectively as a stamped part. In addition, the modular structure enables improved tolerance compensation by connecting smaller portions of the cell pack. At the same time, different circuit configurations, e.g. different numbers of battery cells in series or parallel, can be easily implemented.

Furthermore, the insertion force required is reduced by the fact that not all cells of the module are connected simultaneously, but only a subgroup. The circuit concept can be adapted for different types of connection between the terminals and the cell contacting system.

The adapter can be implemented directly into the cell design to avoid a welding process.

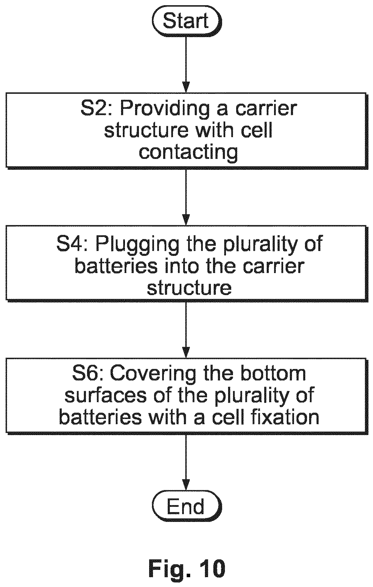

A first example relates to a contact adapter for contacting two concentric terminals, which are arranged together on an end face of a battery extending in the axial direction (A), to a busbar for connecting a plurality of such batteries. For a description of such a cell, please refer to the description of Fig. 10 above.

The contact adapter of the first example comprises a central contact adapter extending in the axial direction (A) and a peripheral contact adapter for arranging around the central contact adapter.

These two parts are provided separately. They are made of a conductive material. They can be connected to the battery cell by gluing or welding. In particular, the connection is then non-detachable, i.e. it cannot be disconnected without causing damage. Since the connection with the contact adapter is made at the cell level, it can be done in a compact and easily controllable environment, enabling high levels of accuracy at the cell level. Alternatively, both parts of the contact adapter will be integrally connected to the battery cell.

The peripheral contact adapter extends in the circumferential direction around the central contact adapter. The peripheral contact adapter thus extends around the central that it forms with the central contact adapter. The peripheral contact adapter can completely enclose the central contact adapter, that is, enclose it 360° in the circumferential direction. Small deviations from this, e.g. manufacturing-related interruptions to manufacture the peripheral contact adapter as a stamped and bent part, are conceivable. This arrangement has the consequence that the contacts cross when two adjacent contacts are connected in series, since the peripheral contact adapter must be passed in a radial direction in order to make contact with the central contact adapter.

The central contact adapter comprises a bottom surface for attaching the central contact adapter to the central terminal of the battery, a tip opposite the bottom surface for passing through a central contact opening of the busbar, wherein the tip rises from the bottom surface to a central contact height, and a side surface extending between the tip and the bottom surface. The side surface has a central contacting portion for contacting a central terminal of the central contact opening of the busbar in a radial direction R.

This arrangement allows the contacting direction at the central terminal of the battery to be reversed, namely from a contacting direction perpendicular to the axial direction to a contacting direction in the radial direction.

The tip of the central contact adapter preferably has a smaller diameter than the bottom surface. This allows the bottom surface to achieve a maximum contact surface with the central terminal of the battery, wherein the central contact adapter simultaneously serves as a guide for aligning the busbar relative to the battery cell. As a result, greater tolerances can be allowed during plugging.

Advantageously, the central contacting portion has a larger diameter than the tip and a smaller diameter than the bottom surface. As a result, the height at which the busbar abuts against the central contacting portion can be defined.

The peripheral contact adapter has a bottom plate for attaching to an annular terminal of the battery, and a hollow contact cylinder, which rises in axial direction A from the bottom plate to a peripheral contact height. The hollow contact cylinder, also referred to as a contact lamella, has a peripheral contacting portion for contacting a peripheral terminal of a peripheral contact opening of the busbar in the radial direction R.

With this arrangement, it is possible to deflect the contacting direction at the annular terminal of the battery, namely a contacting direction perpendicular to the axial direction into a contacting direction in the radial direction. This arrangement can also be used for terminals other than the annular terminals of a battery.

A hollow contact cylinder is a flat, thin, band-shaped element. The bottom plate serves as a carrier structure for the hollow contact cylinder. The hollow contact cylinder runs parallel to the central contact adapter. As a result, the central contact adapter and the hollow contact cylinder can be connected to the busbar in a single plugging operation.

According to the first example, the central contact height is greater than the peripheral contact height.

The space required for contacting in the radial direction is created by the assembly heights in the axial direction A. The different assembly heights enable contacting at two different heights. In this way, the problem of crossing contacts can be overcome. Through a busbar, which is described below, a system can be realized, wherein identical busbars, which can be compactly configured, can be used for the connection. These compact busbars can then be connected with reduced insertion forces, the installation tolerances can be increased and the contacted system is stable in the long term, since the flat busbars can, for example, reduce the effects of vibrations.

A second example relates to a contact adapter according to the first example, wherein the central contact adapter further comprises a shoulder element, wherein the shoulder element projects in the radial direction from the side surface. The shoulder element allows the movement of the busbar to be limited in the axial direction.

A third example relates to a contact adapter according to one of the above examples, wherein the central contact adapter is configured rotationally symmetrical to the axial direction. This makes it particularly easy to align the battery with the busbar. It is particularly preferred if the central contact adapter forms a pin.

A fourth example is a contact adapter according to one of the above examples, in which the hollow contact cylinder is integrally connected to the bottom plate. This makes it particularly easy to manufacture the peripheral contact adapter, e.g. as a stamped and bent part.

A fifth example relates to a contact adapter according to one of the above examples, wherein the hollow contact cylinder and the bottom plate have an L-shaped profile. The bottom plate allows the direction of movement of the busbar to be limited to the axial direction.

A sixth example relates to a contact adapter according to one of the above examples, wherein the bottom plate is configured rotationally symmetrical to the axial direction. In particular, the bottom plate is annular. Additionally or alternatively, the hollow contact cylinder is configured rotationally symmetrical to the axial direction. In particular, the hollow contact cylinder has separate contact webs. This makes it particularly easy to align the battery with the busbar.

A seventh example relates to a busbar for serial contacting by means of contact adapters according to one of the above examples of a plurality of batteries, each battery having two concentric terminals arranged together at one end face of the batteries extending in axial direction A.

For a description of the contact adapters and the battery, reference is made to the description above.

The busbar includes a central busbar portion, a peripheral busbar portion and a bending busbar portion.

These three portions are inextricably linked. For example, the busbar is manufactured as a stamped and bent part from a single sheet of metal. The busbar is made of a conductive material, preferably copper. This allows the busbar to enable a series connection, wherein the arrangement provides sufficient space for an insulator.

The central busbar portion has a central contact opening for passing a central contact adapter having a side surface extending in an axial direction, and a central terminal for contacting in a radial direction the side surface of the central contact adapter. This arrangement makes it possible to plug the busbar onto the central contact adapter in the axial direction. Furthermore, this arrangement enables a partially form-fit connection of the busbar and the central contact adapter.

The central terminal can, for example, be arranged on an inner surface of the central contact opening or form the latter. This enables a particularly compact structure. In addition, the central terminal can contribute to a frictional connection. Thus, the central terminal can also increase conductivity at the same time, since, for example, oxide layers are removed during connection.

The peripheral busbar portion has a peripheral contact opening for passing through a hollow contact cylinder of a peripheral contact adapter extending in the axial direction A up to a peripheral contact height, and a peripheral terminal for contacting in the radial direction (R) a peripheral contacting portion of the hollow contact cylinder at a peripheral contacting portion height. This arrangement makes it possible to plug the busbar onto the peripheral contact adapter in the axial direction. Furthermore, this arrangement enables a partially form-fit connection of the busbar and the peripheral contact adapter.

The peripheral terminal can advantageously form an inner surface of the peripheral contact opening. This enables a particularly compact design. Furthermore, the peripheral terminal can contribute to a frictional connection. Thus, the peripheral terminal can simultaneously increase conductivity, since oxide layers are removed during connection, for example.

Furthermore, the busbar has a bending busbar portion, which is arranged between the central busbar portion and the peripheral busbar portion. The bending busbar portion serves to compensate for the difference in height between the peripheral contacting portion height and the peripheral contact height in axial direction A.

The bend in axial direction A allows the contacts for two adjacent cells to be crossed in order to connect the two adjacent batteries in series. The difference in height makes it particularly easy to insert insulation in the intermediate area. This has the particular advantage that a plurality of identical busbars, which can be configured compactly, can be used for the connection. These compact busbars can then be connected with reduced insertion forces, the installation tolerances can be increased and the contacted system has long-term stability, since the flat busbars can, for example, reduce the effects of vibrations.

An eighth example relates to the busbar according to example seven, wherein the central terminal has a plurality of separate contact wings, which project in the axial direction from the central contact opening. Additionally or alternatively, the peripheral terminal has a plurality of separate contact wings, wherein the contact wings project in the axial direction from the peripheral contact opening. Separate contact wings enable easy manufacturing as a stamped and bent part. Furthermore, contact wings enable a compact structure because they can be arranged on the inside of the openings. Furthermore, separate contact wings enable requirements such as clamping force and insertion force to be adjustable.

A ninth example relates to a busbar according to one of examples seven to eight, wherein the busbar further comprises a contact ring, wherein the contact ring is arranged at the central contact opening and/or the peripheral contact opening in the axial direction. The contact ring can enable the contact surface to be increased in the axial direction. The larger surface results in a reduction of the contact resistance.

Advantageously, the central terminal and/or the peripheral terminal surround the contact ring. For example, contact wings as described in example eight are used. Thus, the contact resistance is further reduced, since the terminals can be made of a material with high conductivity, such as the busbar, and/or in one piece with the busbar.

A tenth example relates to a busbar according to example nine, wherein the contact ring consists of a stiffer material than the busbar. Usually, the busbar and the two parts of the contact adapter are made of well-conducting but soft materials such as copper. The contact ring can be made of a stiffer material, thus increasing the frictional connection, which is also referred to as a force closure. This reduces contact resistance, as it enables a greater contact force. Furthermore, the rigid contact ring helps to remove oxide layers either directly through the contact ring or indirectly via the contact terminals, as described in examples eight and nine above.

An eleventh example relates to a busbar according to one of the examples nine and ten, wherein the contact ring has a slot. The slot makes it possible to set the contact force of the contact ring. In this case, the slot runs in a radial direction.

A twelfth example relates to a busbar according to one of the examples seven to eleven, wherein a diameter of the central contact opening is smaller than a diameter of the peripheral contact opening. This increases the contact surface, since both openings are adapted to the diameter of the respective contact adapter. The diameter is measured in the radial direction.

A thirteenth example relates to a busbar according to one of the examples seven to eleven, wherein the central busbar portion, the bending busbar portion and the peripheral busbar portion together follow the shape of a club in the plane perpendicular to the axial direction, wherein the peripheral busbar portion forms a wider end of the club that tapers at the bending busbar portion towards the central busbar portion. As a result, the busbar can be compact and the force required to compensate for the height difference by the bending busbar portion can be minimized.

A fourteenth example relates to a contacting system comprising a plurality of contact adapters according to one of examples 1 to 6, a busbar according to one of examples 7 to 13 and an insulator, wherein the insulator has an insulator portion extending perpendicularly to the axial direction, wherein the insulator portion completely covers at least the peripheral busbar portion to prevent a short circuit between the peripheral contact adapter and the central contact adapter of a battery of the plurality of batteries. In this way, the contacting system allows two batteries to be connected in series.

A fifteenth example relates to a method for contacting a plurality of batteries, the method comprising:
attaching a contact adapter according to one of examples 1 to 6 to each of the plurality of batteries;
serial connection of two battery cells to a busbar according to one of the examples 7 to 13;
covering the peripheral busbar portion of a battery cell with an insulator.

A sixteenth example relates to assembly methods for creating a plugged battery pack comprising a plurality of batteries, the assembly method comprising:
providing a carrier structure with a cell contact for contacting the plurality of batteries, each battery having two concentric terminals arranged together on one end face of the batteries extending in the axial direction, and
inserting a plurality of batteries into the carrier structure in order to electrically connect at least two batteries via the cell contacting.
wherein the carrier structure with the cell contacting is provided prior to plugging the plurality of batteries to create a plugged battery pack.

A battery pack (or battery module) is an arrangement of battery cells that work together to provide greater capacity and power than individual batteries.

The carrier structure allows components of the battery pack to be held. These components include, in particular, the batteries. For a description of the batteries, reference is made to the above examples 1 to 15.

In addition, the carrier structure contains the cell contacting. For example, the carrier structure consists of an insulating material such as plastic. The cell contacting consists of a conductive material such as metal to electrically contact the batteries.

The carrier structure with the cell contacting is provided prior to the insertion of the batteries. This makes it possible to contact the batteries solely through a frictional connection, without the need for a material connection such as welding or soldering.

In frictional connections, the parts are held together by frictional forces. These frictional forces arise when the parts are pressed against each other. In material connections, the parts are joined by molecular or atomic forces, creating a firm, non-detachable connection. This connection is created by combining materials, often by melting or chemical processes.

This means that instead of bringing the cell contacting to the pre-assembled batteries, the batteries are plugged into the cell contacting. The batteries are thus detachably held in the carrier structure.

Inserting the batteries into the carrier structure makes assembly, repair and disassembly easier for the user.

A seventeenth example relates to the assembly method according to example sixteen, wherein at least the battery cells have contact adapters according to one of examples 1 to 6 and/or the cell contacting comprises a busbar according to one of examples 7 to 13.

An eighteenth example relates to the assembly method according to example sixteen or seventeen, wherein the plurality of batteries are plugged one after the other into the carrier structure. This simplifies assembly, since, in particular, the tolerances for the alignment of the cells can be more easily maintained.

A nineteenth example relates to the assembly method according to one of examples sixteen to eighteen, wherein each battery has a bottom surface opposite the end face and the assembly method further comprises covering the bottom surfaces of the plurality of batteries with a cell fixation to fix the batteries in the battery pack. In this way, unintentional loosening of the batteries inserted into the battery pack can be prevented. The cell fixation can be, for example, a housing that encloses the battery pack and, in particular, seals it against media. Advantageously, the cell fixation is held on the carrier structure. Alternatively or additionally, the batteries can be fixed by screws.

In the nineteenth example, covering the bottom surfaces after plugging them into the carrier structure is particularly preferred.

A twentieth example relates to the assembly method according to one of examples sixteen to nineteen, wherein the carrier structure further comprises a thermal coupling element for thermally coupling the cell contacting with a thermal conduction element and/or a thermal conduction element for transporting heat out of the battery pack comprising the cell contacting. This allows the temperature to be efficiently dissipated from the plugged battery pack, which has higher contact resistance than a material-locking connection due to the frictional connection.

It is particularly preferred in the twentieth example when the thermal coupling element comprises an electrically insulating material. Thus, it can be connected to the cell contacting in a heat-conducting manner. Additionally or alternatively, the thermal conduction element can have a higher thermal conductivity than the thermal coupling element. For example, the conduction element can consist of a metal or the thermal conduction element can comprise an active cooling such as a liquid cooling system. Additionally or alternatively, the conduction element can have a cooling fin.

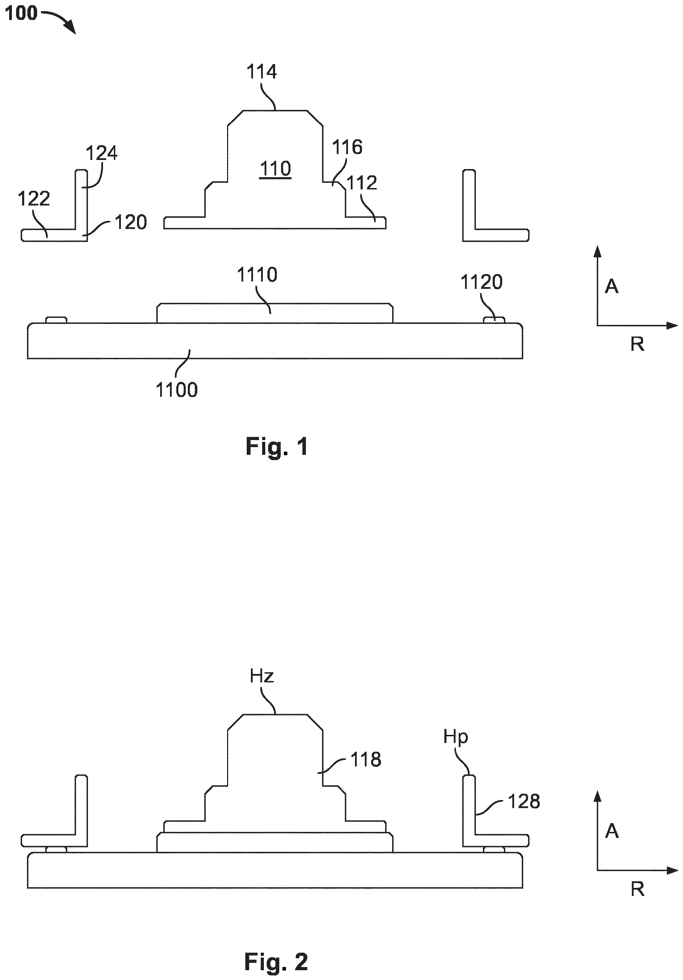

Fig. 1 shows a contact adapter with a central contact adapter 110 and a peripheral contact adapter 120. The central contact adapter 110 and the peripheral contact adapter 120 are made of a conductive material, such as copper.

The central contact adapter 110 is adapted to be attached to a bottom surface 112 at a central terminal 1110 of a battery 1100. The peripheral contact adapter 120 is adapted to be arranged with a bottom plate 122 at an annular terminal 1120 of the battery 1100. In particular, the central contact adapter 110 and the peripheral contact adapter 120 can be arranged on the terminals 1110, 1120 of the battery 1100 by welding, gluing or a similar connection technology. Alternatively, they can be integrally manufactured with the battery. The arranged state is shown, for example, in Figure 2.

The peripheral contact adapter 120 is arranged around the central contact adapter 110. In other words, the peripheral contact adapter 120 is located opposite at least two opposite side surfaces of the central contact adapter 110. In the cross-sectional views in Figures 1 and 2, the extent of the contact adapter in the circumferential direction U is not shown. The central contact adapter 110 and the peripheral contact adapter 120 can have the same symmetry as the battery in the circumferential direction U. In particular, they can be rotationally symmetrical about the axial direction A if the battery is a circular cylindrical cell as shown in Fig. 10.

As shown in Figures 1 and 2, the bottom surface 112 of the central contact adapter 110 can cover a surface equal to that of the central terminal 1110 of the battery. In particular, the dimensions in the radial direction R may be the same or similar. However, this is not necessary. As shown, for example, for the bottom plate 122 of the peripheral contact adapter 120, the surface of the bottom plate 122 may be larger than the annular terminal 1120.

As shown in Figures 1 and 2, an inner radius of the bottom plate 122 of the peripheral contact adapter 120 in the radial direction is larger than an outer circumference of the bottom surface 112 of the central contact adapter 110. Thus, a short circuit between the central contact adapter 110 and the peripheral contact adapter 120 can be avoided. The dimensions of the bottom surface 112 and the bottom plate 122 in the radial direction are determined by the sizes of the battery terminals 1110, 1120, the required insulation distances and the available contact surfaces.

For attaching the contact adapter 100 to the battery cell 1100, the central contact adapter 110 and the peripheral contact adapter 120 can be held by a receptacle, not shown, and thus be attached to the corresponding terminals of the battery 1100 in a single process step. This receptacle can also remain in place, for example, to serve as additional insulation.

Alternatively, the two parts 110 and 120 of the contact adapter 100 can be attached to the battery cell 1100 in two process steps one after the other.

In both cases, the configuration shown is preferred because the process step of attaching the contact adapter is carried out at the cell level. This allows for high tolerances to be maintained and for the central contact adapter 110 to be aligned with high accuracy to the peripheral contact adapter 120.

In addition to the radial direction R, the central contact adapter 110 and the peripheral contact adapter 120 also extend in the axial direction A.

The central contact adapter 110 is pin-shaped in the axial direction and is also referred to as a pin, i.e. it has a columnar structure. The central contact adapter 110 comprises the bottom surface 112 described above, which may be formed as a base plate having a thickness in the axial direction A.

Adjacent to the bottom surface 112, the central contact adapter 110 comprises a shoulder portion having a shoulder element 116. The shoulder portion is adjacent to one end of the bottom surface 110 and the shoulder element 116 can have a smaller diameter in the radial direction than the bottom surface 110.

A tip portion having a tip 114 adjoins the shoulder element 116 of the central contact adapter 110. The tip 114 can have a smaller diameter in the radial direction R than the tip portion and the tip portion can have a smaller diameter in the radial direction than the shoulder element 116.

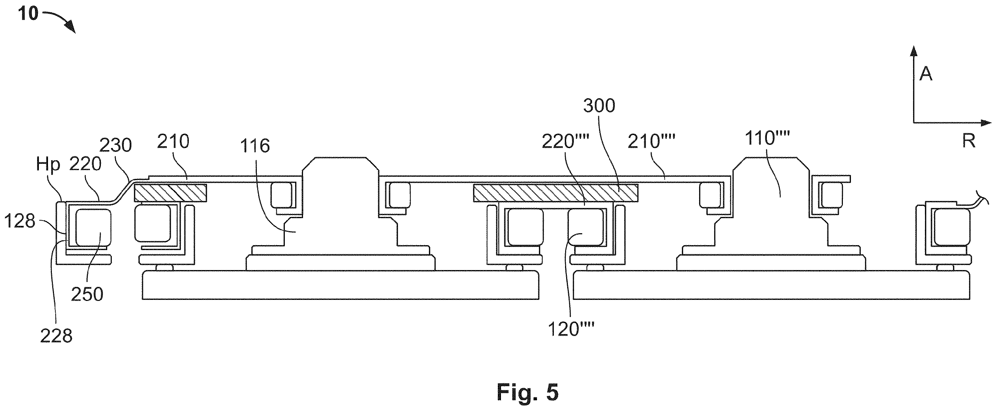

In the contacting system 10, as shown for example in Fig. 5, the shoulder element 116 limits the movement of a busbar 200 in the axial direction A.

The peripheral contact adapter 120, as shown in Figures 1 and 2, comprises the bottom plate 122 described above. From this bottom plate 122, a hollow contact cylinder 124 extends in the axial direction A. Although not visible in the sectional view in Fig. 1, the bottom plate 122 may be annular. The hollow contact cylinder 124 may follow the edge of the bottom plate 122 in the form of a band or may consist of a plurality of contact webs. Thus, the peripheral contact adapter 120 can be manufactured particularly easily as a stamped and bent part.

The bottom plate 122 can be annular. It has an inner diameter R1 and an outer diameter R2. The hollow contact cylinder 124 can be arranged on the inner diameter R1. In the schematic Figures 1 and 2, the hollow contact cylinder 124 is arranged at a right angle to the bottom plate 122. However, it is also possible that the hollow contact cylinder is arranged at an acute angle 124 to the axial direction A on the bottom plate.

In the assembled state, as shown in Fig. 2, the central contact adapter 110 has a central contacting portion 118 on a side surface that extends between the tip 114 and the bottom surface 112. In particular, the central contacting portion 118 is arranged between the shoulder element 116 and the tip 114. Similarly, the peripheral contact adapter 120 has a peripheral contacting portion 128 arranged on the hollow contact cylinder 124. As shown in Fig. 2, the peripheral contacting portion 128 and the central contacting portion 118 are separated from each other in the radial direction. Furthermore, the contact adapter 100 increases the contact area of the battery in the axial direction A.

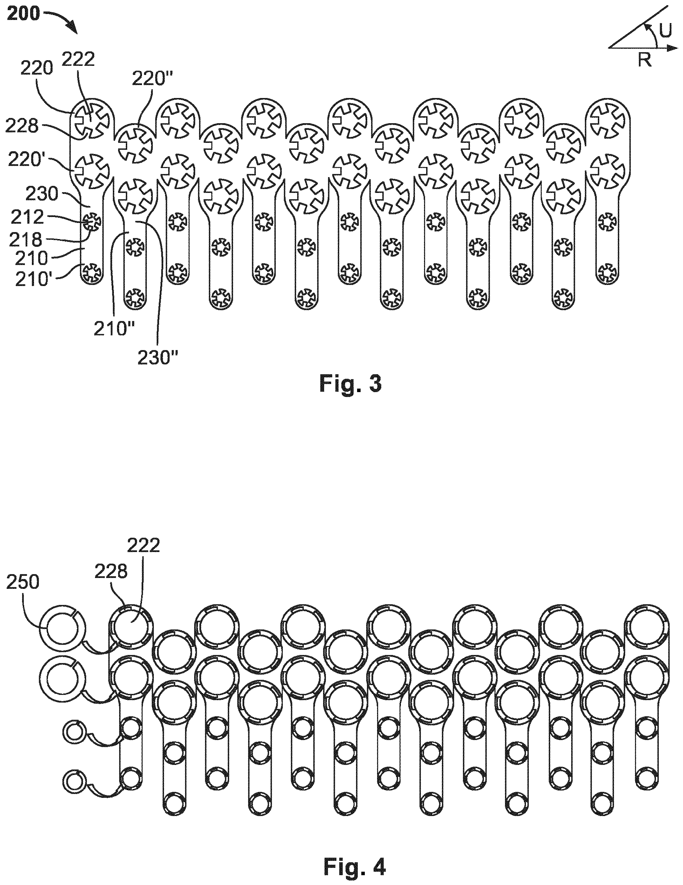

Furthermore, it can be seen from Fig. 2 that the hollow contact cylinder 124 extends up to a peripheral contact height Hp. The tip 114 extends up to a central contact height Hz. The central contact height Hz is at the mounted distance further from the battery in the axial direction A than the peripheral contact height Hp. Due to these different heights, a busbar 200, as described in Figures 3 to 5, can be used to enable contacting. Furthermore, the alignment of the busbar 200 to the contact adapter is facilitated because it is first aligned to the pin-shaped tip of the central contact adapter.

As described above, the contact adapter 100 from Figures 1 and 2 contacts a battery and a busbar 200, which is shown in detail in Figures 3 to 5.

The busbar 200 of Fig. 3 comprises a central busbar portion 210, a peripheral busbar portion 220 and a bending busbar portion 230, which is arranged between the central busbar portion 210 and the peripheral busbar portion 220. The busbar 200 extends perpendicularly to the axial direction A, namely in the radial direction R and the circumferential direction U.

Here, the busbar 200 comprises a plurality of 2x13 central busbar portions 210, 210', 210", a plurality of 2x13 peripheral power busbar portions 220, 220', 220" and a plurality of 13 bending busbar portions 230, 230". This plurality of portions allows for a plurality of 2x13 batteries to be contacted in parallel at one terminal and 2x13 batteries at another terminal. Each of the terminals is then contacted serially to the other terminal via the busbar 200.

In other examples not shown, the central busbar portion includes only one central busbar portion 210 and one peripheral busbar portion 220. Each pair of central busbar portions 210 and peripheral busbar portions 220 allows two adjacent terminals to be connected in series.

Each central busbar portion 210 of the busbar 200 comprises a central contact opening 212 that is bounded by a side surface. The central contact opening 212 is larger in the radial direction R than the diameter of the tip 114 of the central contact adapter. From one side surface of the central contact openings 212, a central terminal 218 extends. Here, the central terminal 218 consists of a plurality of five separate contact wings. As described later in Fig. 4, these wings are bent. This increases the contact surface in the axial direction A.

Similar to the central busbar portion 210, each of the peripheral busbar portions 220 has a peripheral contact opening 222. The peripheral contact openings 222 are larger in the radial direction R than the diameter of the hollow contact cylinder 124 of the peripheral contact adapter 120. A peripheral terminal 228 extends from the peripheral contact opening 222. In this case, the peripheral terminal 218 consists of a plurality of five separate contact wings. As described later in relation to Fig. 4, these wings are bent. This increases the contact surface in the axial direction A.

The bending busbar portion 230 is arranged between the central busbar portion 210 and the peripheral busbar portion 220. As shown in Fig. 5, the busbar 200 is bent in the axial direction A at the bending busbar portion. The arrangement at the bending busbar portion 230 enables serial contacting at different heights in axial direction A. Thus, the bending portion enables the height difference between the height of the peripheral contacting portion 128 and the peripheral contact height Hp of an adjacent cell in axial direction A to be compensated.

In the case of an arrangement of the plurality of battery cells as in Fig. 10, a hexagonal arrangement, which is particularly space-saving for circular cylindrical cells, the central busbar portion 210, the bending busbar portion 230 and the peripheral busbar portion 220 are club-shaped in the plane perpendicular to the axial direction A, as shown in Fig. 3. The peripheral busbar portion forms a wider end of the club that tapers at the bending busbar portion to the central busbar portion. This enables easy manufacturing of the busbar 200, since, due to the recesses between the central busbar portions 210 and the central busbar portion 210", a bend at the bending busbar portion 230 does not affect a bend at the bending busbar portion 230".

Fig. 4 shows that the busbar 200 can also have a contact ring 250 for each central busbar portion and each peripheral busbar portion, respectively. The contact ring 250 is arranged on each of the central contact openings and each of the peripheral contact openings 222 in the axial direction A. The contact ring 250 can have a slot 252 that splits the contact ring 250 in the radial direction R.

The wings of the central terminal and the wings of the peripheral terminal 228 are bent around the contact ring 250. Thus, as shown in Fig. 5, the contact surface between the busbar 200 at the peripheral terminal 228 and the peripheral contacting portion 128 at the peripheral contact adapter 110 is maximized in axial direction A. The same applies to the central terminal 218 and the central contacting portion 118.

The contact ring 250 increases the contact pressure between the peripheral terminal 228 and the peripheral contacting portion 128. The contact pressure can be set by the material selection for the contact ring 250 and the slot 252. It is particularly preferred if a stiffer material, such as steel, is used for the contact ring 250 than for the busbar, which is made of copper, for example.

Fig. 5 shows a contacting system 10 with a plurality of contact adapters. For the description of the contact adapters, reference is made in particular to Figures 1 and 2. Furthermore, the contacting system includes busbars. For the description of the busbars, reference is made in particular to Figures 3 and 4.

Furthermore, the contacting system 10 includes an insulator 300. The insulator 300 has an insulator portion that extends perpendicularly to the axial direction A. The insulator portion completely covers the peripheral busbar portion 220"'. This prevents a short circuit through the central busbar portions 210'" of the busbar 200, namely between the peripheral contact adapter 120‴ and the central contact adapter 110‴ of a single battery cell of the plurality of batteries.

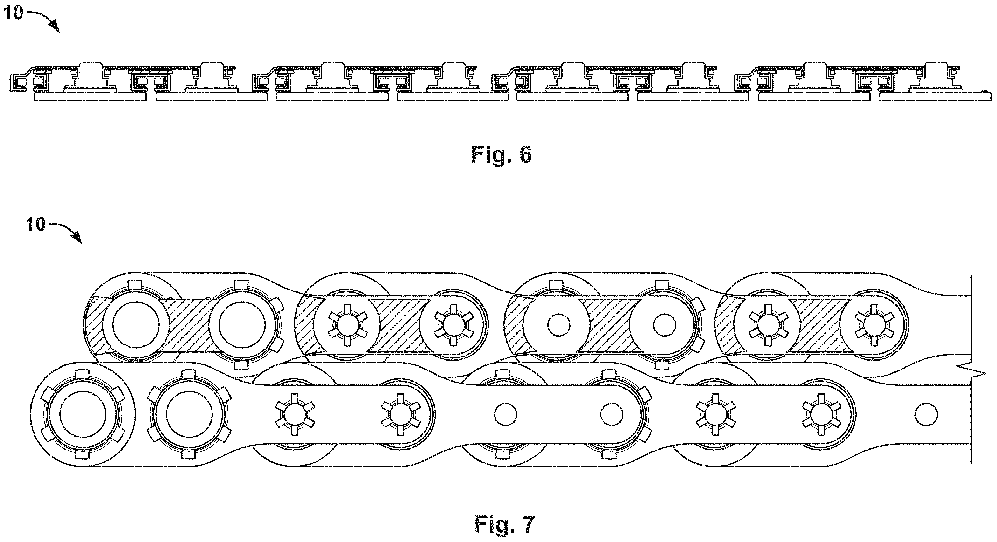

The serial connection of groups of batteries is shown in Figures 6 and 7. Fig. 6 is a sectional view like Fig. 5, and Fig. 7 shows a top view of the groups of batteries from Fig. 6.

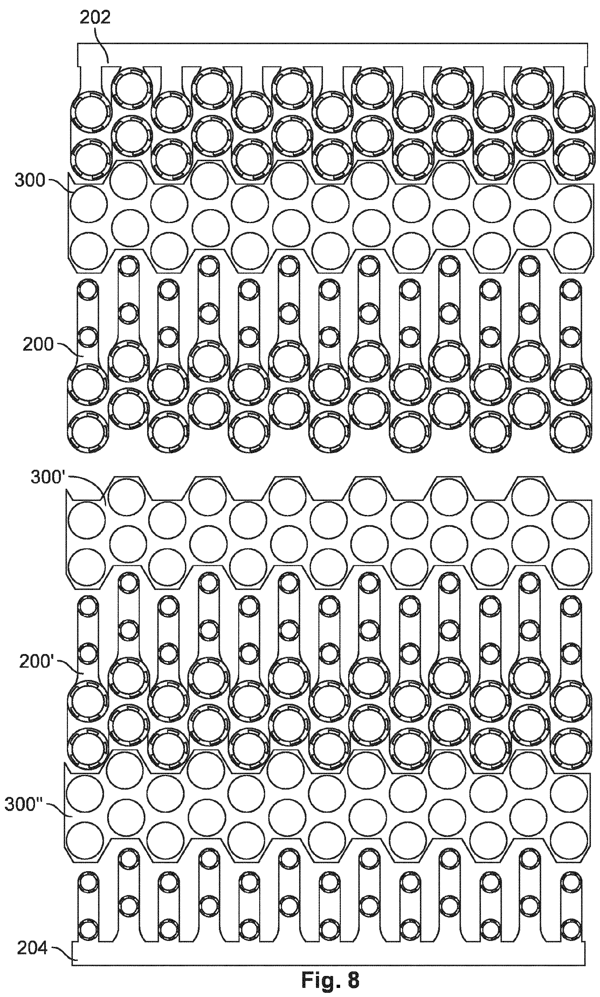

A method of assembly is shown in Figures 2, 8 and 9. First, as shown in Fig. 2, a contact adapter 100 is attached to each battery cell. Then, a plurality of identical busbars 200, 200' are provided. Furthermore, adapted end sections 202 and 204 are provided. Furthermore, a plurality of insulators 300, 300', 300" are provided.

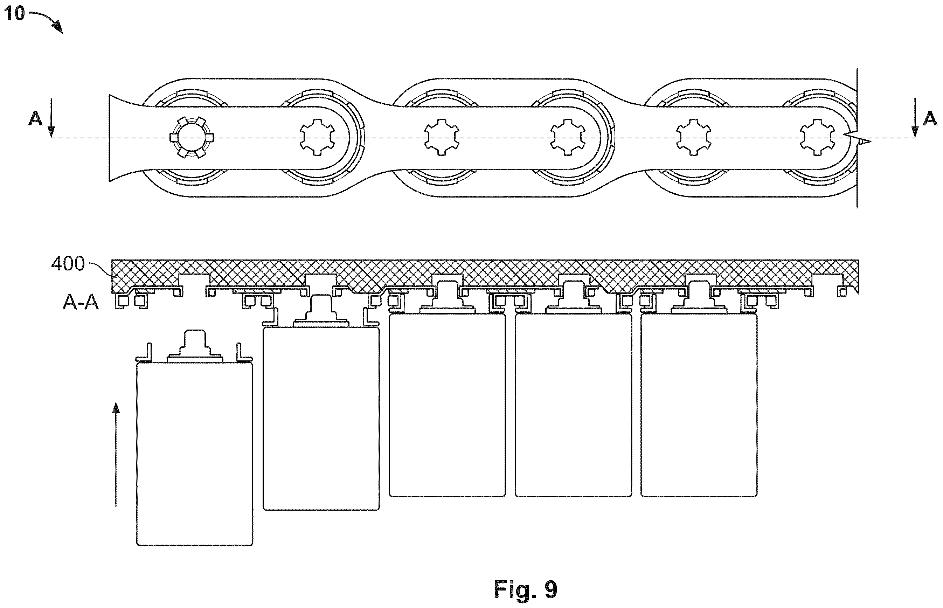

Then, as shown in Fig. 9, the busbars 200, 200' can first be pre-assembled with the insulators 300, 300', 300" by means of a carrier structure 400. In the pre-assembled busbars, between which the insulators are received, battery cells can then be plugged with the contact adapters. This enables a preferred plugging system.

Fig. 9 shows a solution with the contact adapter 100 and the busbar 200 described above. However, these are not required. In general, an assembly method for manufacturing a plugged battery pack, such as shown in Fig. 10, can also be plugged without these elements.

Fig. 10 is a flowchart for an assembly method for creating a plugged battery pack.

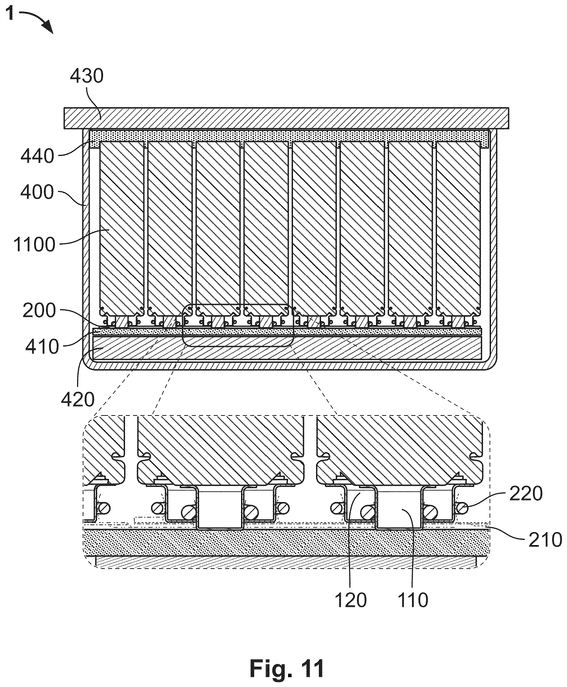

In step S2, the assembly method comprises providing a carrier structure, for example the carrier structure 400, wherein the carrier structure has a cell contacting for contacting the plurality of batteries. Each battery is one of the batteries 1100 shown in Fig. 11. Each battery has two concentric terminals 1110, 1120 that are arranged together on an end face of the batteries 1100 that extends in the axial direction A.

The cell contacting may include a busbar 200 as shown in Figures 3 to 4 and 8.

Subsequently, the assembly method includes the step S4 of inserting the plurality of batteries into the carrier structure in order to electrically connect at least two batteries via the cell contacting. In this way, the two batteries are held and connected in series or parallel. In particular, the carrier structure is provided with the cell contacting before the plurality of batteries are plugged to create a plugged battery pack.

Each of the battery cells can have a contact adapter 100 according to Figures 1 and 2. For the plugged battery pack, reference is made in particular to Figures 5 to 7. In particular, a plurality of batteries can be plugged one after the other into the carrier structure, as shown for example in Figure 9.

Each of the batteries may have a bottom surface opposite the end surface, and the assembly method may further include the step S6. In step S6, the bottom surfaces of the plurality of batteries are covered with a cell fixation to fix the batteries in the battery pack.

A plugged battery pack 1 is shown in Fig. 11. A plurality of batteries 1100 are arranged in the battery pack 1. Each battery 1100 has two concentric terminals that are arranged together on an axially extending end face of the batteries 1100. Each battery can have a plurality of contact adapters, such as the central contact adapter 110 and the peripheral contact adapter 120 described above.

Furthermore, the battery pack 1 comprises a cell contacting, for example the busbar 200 as described above. The busbar 200 comprises a central busbar portion 210 and a peripheral busbar portion 220. Although not shown in the Figures, another cell contacting may also be used. For example, the cell contacting does not necessarily have to include the bending busbar portion.

Furthermore, the battery pack 1 comprises a carrier structure 400. The carrier structure 400 can be pot-shaped, as shown in Fig. 11. On the other hand, the carrier structure 400 can be plate-shaped, as shown for example in Fig. 9. The cell contacting described above, for example the busbar 200, is received in the carrier structure 400. In particular, the cell contacting is non-detachably connected to the carrier structure 400. Non-detachable here means that two parts cannot be separated without at least destroying one of them.

Furthermore, the carrier structure 400 can comprise further components, such as a thermal coupling element 410 for thermally coupling the cell contacting to a thermal conduction element 420 and/or a thermal conduction element 420 for transporting heat out of the battery pack with the cell contacting. In particular, the components 410 and 420 are non-detachably connected to the carrier structure 400. Thus, the thermal coupling element 410 can have an electrically insulating material in order to electrically insulate the cell contacting from the thermal conduction element 420. This also allows the thermal conduction element 420 to be made of an electrically conductive material. Although not shown in Fig. 11, the thermal conduction element 420 may include active cooling and/or include a cooling fin.

Furthermore, a connection element, not shown, can be provided on one edge of the carrier structure 400 in order to close the battery pack with a housing component 430, for example a plate-shaped bottom element. A cell fixation 440 can be provided between the housing component 430 and the batteries 1100 in order to fix the batteries 1100 in the battery pack 1. For example, the cell fixation 440 may comprise an elastic material and the housing component 430 may comprise a rigid material. The housing component 430, which is rigid in comparison to the cell fixation 440, enables the batteries 1100 to be protected from external influences, and the cell fixation 440, which is elastic in comparison to the housing component 430, enables tolerances to be easily maintained and the batteries 1100 to be easily fixed in place relative to one another.

Although not shown in the Figures, the battery can have a different shape than a circular cylinder. Instead of being circular, any polygon can form the base surface of the cylinder. The openings then have a corresponding circumference that follows the polygon. The same applies to the contact ring, which then forms a contact polygon.

### List of Reference Signs:

| **Reference sign** | **Description** |
|---|---|
| 1 | battery pack |
| 10 | contacting system |
| 100 | contact adapter |
| 110 | central contact adapter |
| 112 | bottom surface |
| 114 | tip |
| 116 | shoulder element |
| 118 | central contacting portion |
| 120 | peripheral contact adapter |
| 122 | bottom plate |
| 124 | hollow contact cylinder |
| 128 | peripheral contacting portion |
| 200 | busbar |
| 202, 204 | end sections |
| 210 | central busbar portion |
| 212 | central contact opening |
| 218 | central terminal |
| 220 | peripheral busbar portion |
| 222 | peripheral contact opening |
| 228 | peripheral terminal |
| 230 | bending busbar portion |
| 250 | contact ring |
| 252 | slot |
| 300 | insulator |
| 400 | carrier structure |
| 410 | thermal coupling element |
| 420 | thermal conduction element |
| 430 | housing component |
| 440 | cell fixation |
| 1000 | cell system |
| 1100 | battery |
| 1110 | central terminal |
| 1120 | annular terminal |
| 1130 | insulation area |

## Claims

1. Contact adapter (100) for contacting two concentric terminals (1110, 1120), which are arranged together on an end face of a battery (1100) extending in the axial direction (A), having a busbar (200) for connecting a plurality of such batteries (1000), the contact adapter (100) comprising:
a central contact adapter (110) extending in the axial direction (A), the central contact adapter (110) comprising:
a bottom surface (112) for attachment to a central terminal (1110) of the battery (1100),
an opposite tip (114) for passing through a central contact opening of the busbar (200), wherein the tip (114) rises from the bottom surface (112) to a central contact height (Hz) and
a side surface extending between the tip (114) and the bottom surface (112), having a central contacting portion (118) for contacting a central terminal (218) of the central contact opening (222) of the busbar (200) in a radial direction (R);
a peripheral contact adapter (120) for arranging around the central contact adapter (110), the peripheral contact adapter (120) comprising:
a bottom plate (122) for attachment to an annular terminal (1120) of the battery (1100) and
a hollow contact cylinder (124), which rises in the axial direction (A) from the bottom plate (122) up to a peripheral contact height (Hp), having a peripheral contacting portion (128) for contacting a peripheral terminal (228) of a peripheral contact opening (220) of the busbar (200) in the radial direction (R);
wherein the central contact height (Hz) is greater than the peripheral contact height (Hp).

2. Contact adapter (100) according to claim 1, wherein the central contact adapter (110) further comprises a shoulder element (116), wherein the shoulder element (116) projects in the radial direction (R) from the side surface.

3. Contact adapter (100) according to one of the preceding claims, wherein the central contact adapter (110) is rotationally symmetrical to the axial direction (A), in particular wherein the central contact adapter (110) forms a pin.

4. Contact adapter (100) according to one of the preceding claims, wherein the hollow contact cylinder (124) is integrally connected to the bottom plate (122) and/or wherein the hollow contact cylinder (124) and the bottom plate (122) have an L-shaped profile.

5. Contact adapter (100) according to one of the preceding claims, wherein the bottom plate (122) and/or the hollow contact cylinder (124) is/are configured to be rotationally symmetrical about the axial direction (A), in particular wherein the bottom plate (122) is annular and/or the hollow contact cylinder (124) comprises separate contact webs.

6. Busbar (200) for serially contacting a plurality of batteries (1100) by means of contact adapters (100) according to one of the preceding claims, each battery (1100) having two concentric terminals (1110, 1120) arranged together on an end face of the batteries (1100) extending in the axial direction (A), the busbar (200) comprising:
a central busbar portion (210) having
a central contact opening (212) for passing through a central contact adapter (110) having a side surface extending in the axial direction (A) and
a central terminal (218) for contacting in a radial direction (R) the side surface of the central contact adapter (110);
a peripheral busbar portion (220) having
a peripheral contact opening (222) for passing through a hollow contact cylinder (124) of a peripheral contact adapter (220), which extends in the axial direction (A) up to a peripheral contact height, and
a peripheral terminal (228) for contacting, in the radial direction (R), a peripheral contacting portion (128) of the hollow contact cylinder at a peripheral contacting portion height;
a bending busbar portion (230) arranged between the central busbar portion (210) and the peripheral busbar portion (220) to compensate for the difference in height between the peripheral contacting portion height and the peripheral contact height (Hp) in the axial direction (A).

7. Busbar (200) according to claim 6, wherein the central terminal (218) and/or the peripheral terminal (228) comprises a plurality of separate contact wings, wherein the contact wings project in the axial direction (A) from the central contact opening (212) or the peripheral contact opening (222).

8. Busbar (200) according to one of claims 6 to 7, further comprising a contact ring (250), wherein the contact ring (250) is arranged on the central contact opening (212) and/or the peripheral contact opening (222) in the axial direction, in particular wherein the contact ring (250) is made of a stiffer material than the busbar (200) and/or wherein the contact ring (250) has a slot (252).

9. Busbar (200) according to one of claims 6 to 8, wherein a diameter of the central contact opening (212) is smaller than a diameter of the peripheral contact opening (222) and/or wherein the central busbar portion (210), the bending busbar portion (230) and the peripheral busbar portion (220) together follow the shape of a club in the plane perpendicular to the axial direction (A), wherein the peripheral busbar portion (220) forms a wider end of the club, which tapers at the bending busbar portion (230) towards the central busbar portion (210).

10. Contacting system (10) comprising a plurality of contact adapters (100) according to one of claims 1 to 5, a busbar (200) according to one of claims 6 to 9 and an insulator (300), wherein the insulator has an insulator portion extending perpendicularly to the axial direction, wherein the insulator portion completely covers the peripheral busbar portion (220) to prevent a short circuit between the peripheral contact adapter (120"") and the central contact adapter (110"") of one battery of the plurality of batteries.

11. Method for contacting a plurality of batteries (1100), the method comprising:
attaching a contact adapter (100) according to one of claims 1 to 5 to each of the plurality of batteries (1100);
serially connecting two battery cells (1100) to a busbar (200) according to one of claims 6 to 10; and
covering the peripheral busbar portion (220) with an insulator (300).

12. Assembly method for creating a plugged battery pack (1) having a plurality of batteries (1100), the assembly method comprising:
providing a carrier structure (400) having a cell contacting for contacting the plurality of batteries, each battery (1100) having two concentric terminals (1110, 1120) arranged together at an end face of the batteries (1100) extending in the axial direction (A), and
plugging the plurality of batteries (1100) into the carrier structure (400) to electrically connect at least two batteries (1100) via the cell contacting,
wherein the carrier structure (400) with the cell contacting is provided prior to plugging the plurality of batteries (1100) to create the plugged battery pack (1).

13. Assembly method according to claim 12, wherein the plurality of batteries are plugged one after the other into the carrier structure, in particular wherein at least the batteries comprise contact adapters (100) according to one of claims 1 to 6 and/or the cell contacting comprises a busbar (200) according to one of claims 7 to 13.

14. Assembly method according to one of claims 12 to 13, wherein each battery (1100) has a bottom surface opposite the end surface and the assembly method further comprises:
covering the bottom surfaces of the plurality of batteries with a cell fixation to fix the batteries in the battery pack,
in particular wherein covering of the bottom surfaces is effected after plugging into the carrier structure (400).

15. Assembly method according to one of claims 12 to 14, wherein the carrier structure (400) further comprises a thermal coupling element for thermally coupling the cell contacting to a thermal conduction element and/or a thermal conduction element for transporting heat out of the battery pack having the cell contacting,
in particular wherein the thermal coupling element comprises an electrically insulating material and/or the thermal conduction element has a higher thermal conductivity than the thermal coupling element, optionally wherein the thermal conduction element comprises an active cooling and/or comprises a cooling fin.
